# EUROPÄISCHE PATENTSCHRIFT

(11) **EP 0 637 686 B1**
(45) Veröffentlichungstag und Bekanntmachung des Hinweises auf die Patenterteilung: **22.04.1998**
(21) Anmeldenummer: 94110711.2
(22) Anmeldetag: 09.07.1994
(51) Int. Cl.: F02M 45/08, F02M 61/16

(54) **Kraftstoffeinspritzdüse für eine Brennkraftmaschine**
Fuel injection nozzle for internal combustion engines
Injecteur de combustible pour moteurs à combustion interne

(30) Priorität: 03.08.1993 DE 4325979
(43) Veröffentlichungstag der Anmeldung: 08.02.1995
(73) Patentinhaber: ROBERT BOSCH GMBH, 70442 Stuttgart (DE)
(72) Erfinder: Hofmann, Karl, Dipl.-Ing. (FH), D-71686 Remseck (DE); Warga, Johann, D-74321 Bietigheim-Bissingen (DE)

(56) Entgegenhaltungen:
- WO-A-92/19857
- DE-A- 3 129 914
- US-A- 3 820 723
- US-A- 4 715 542

## Beschreibung

### Stand der Technik

Die Erfindung geht aus von einer Kraftstoffeinspritzdüse für eine Brennkraftmaschine, insbesondere für eine direkt einspritzende Dieselbrennkraftmaschine nach dem Oberbegriff des Anspruchs 1. Um Kraftstoffeinspritzdüsen verhältnismäßig schlank und mit wenig Materialaufwand zu gestalten, ist es bereits durch die DE-A-2 402 534 und die DE-OS 31 29 914 bekannt, die Kammer zur Aufnahme der als Schraubendruckfeder ausgebildeten Schließfeder axial versetzt zur Düsenachse im Düsenhalter anzuordnen, so daß die die Federkammer umgebende Wand des Düsenhalters ungleich dick ist, und den Kraftstoffzulaufkanal durch den damit bewirkten dickeren Sektor zu führen. Damit die durch die exzentrisch zur Düsen- und Düsennadelachse aufgebrachte Schließkraft der Schließfeder erzeugten Querkräfte nicht auf die Düsennadel übertragen werden, ist das die Schließfeder abstützende Druckglied als Führungskörper ausgebildet, das verhältnismäßig lang ausgebildet und mit seinem Umfang in der Federkammer axial verschiebbar geführt ist. Die Ausbildung des Druckglieds als Führungskörper ist aufwendig und die Reibung beim Verschieben des Führungskörpers beeinflußt die Schließkraft der Schließfeder ungünstig.

### Vorteile der Erfindung

Die erfindungsgemäße Kraftstoffeinspritzdüse mit den kennzeichnenden Merkmalen des Anspruchs 1 hat den Vorteil, daß der Exzentrizität des Federkraftangriffs auf die Ventilnadel eine verhältnismäßig große Kraftübertragungsfläche an der Ventilnadel vorhanden ist, über die Querkräfte nicht übertragen werden können. Außerdem ist die Kraftstoffeinspritzdüse in ihrem Aufbau einfach und gut zusammenzubauen.

Eine besonders einfache Anordnung für die Schließkraftübertragung ergibt sich durch die Gestaltung nach Anspruch 2.

Weitere zweckmäßige Ausgestaltungen lassen sich den Unteransprüchen entnehmen.

### Zeichnung

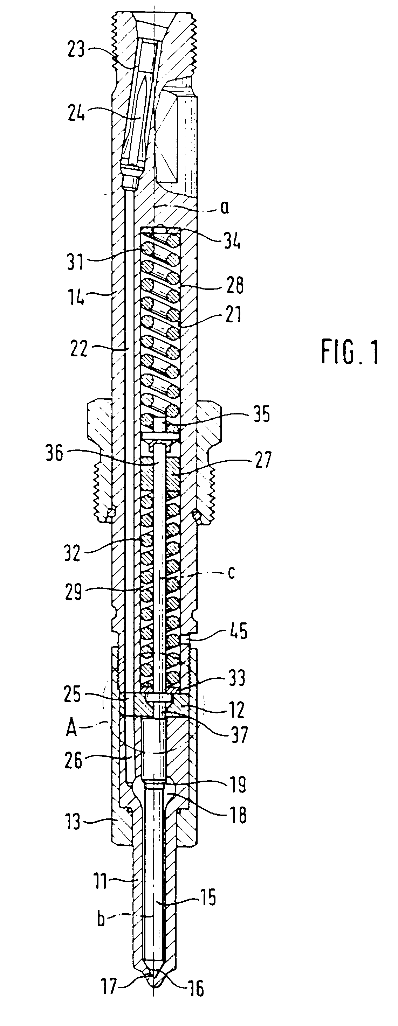

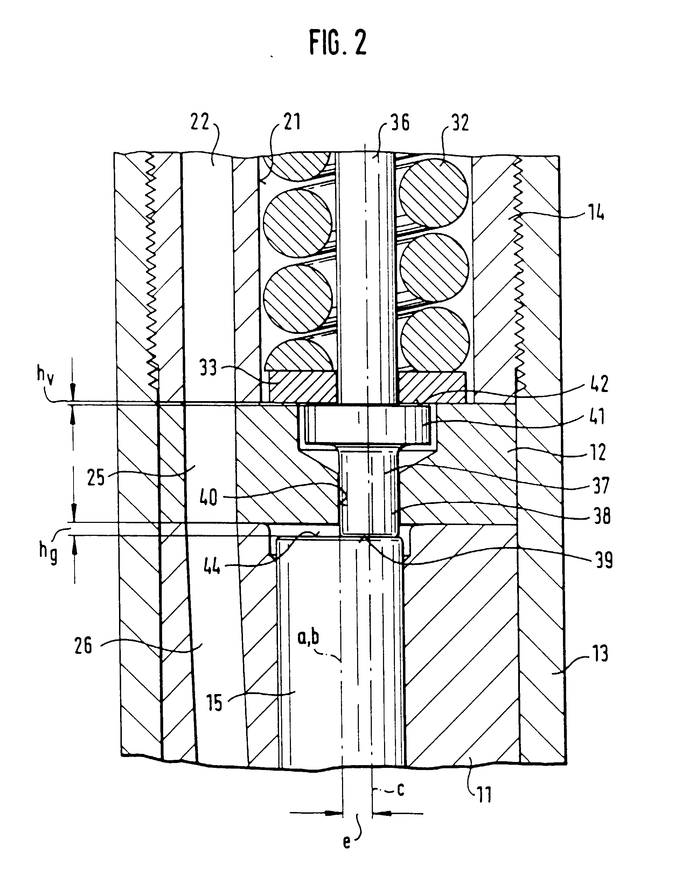

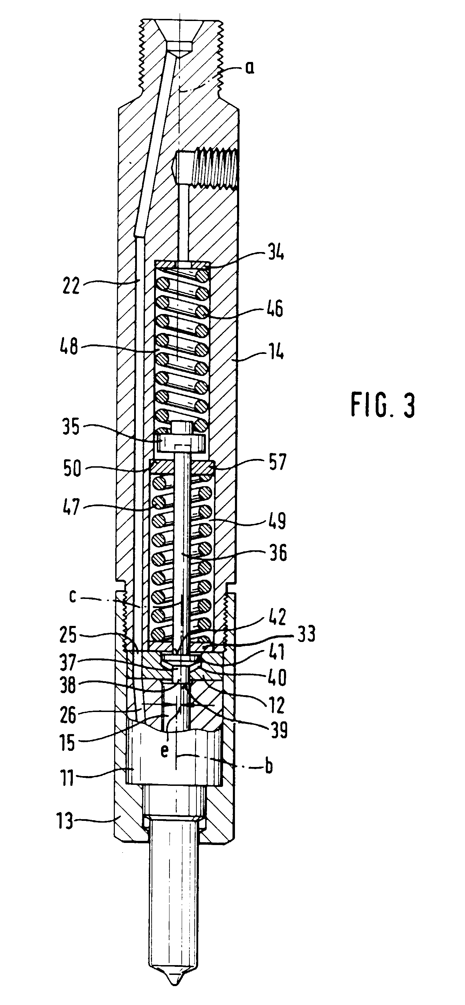

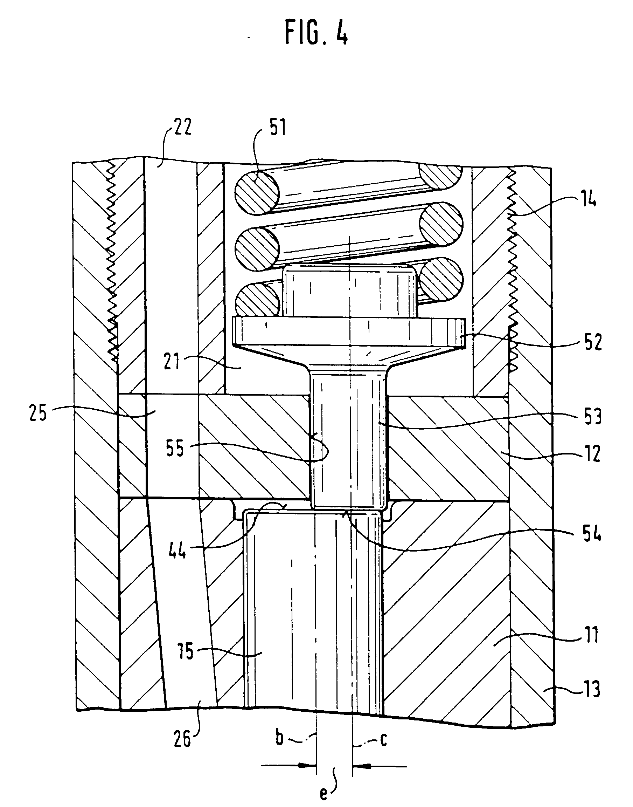

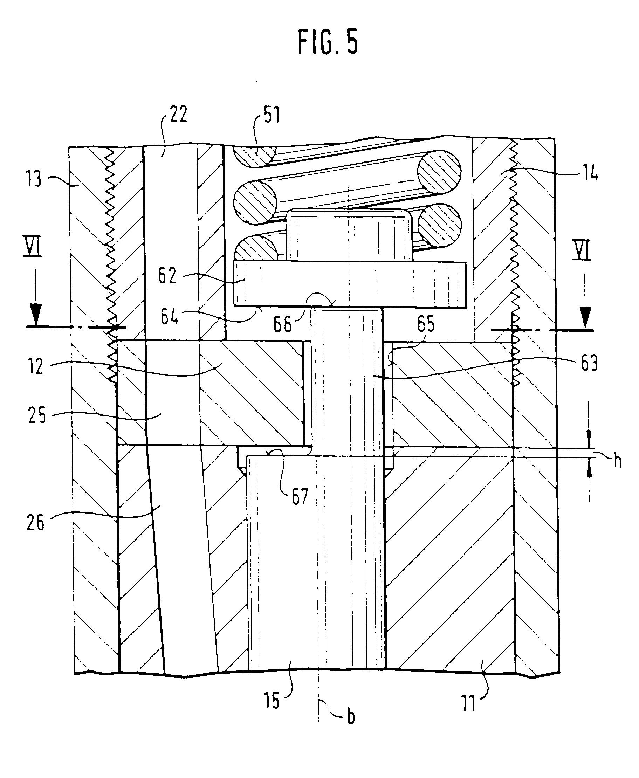

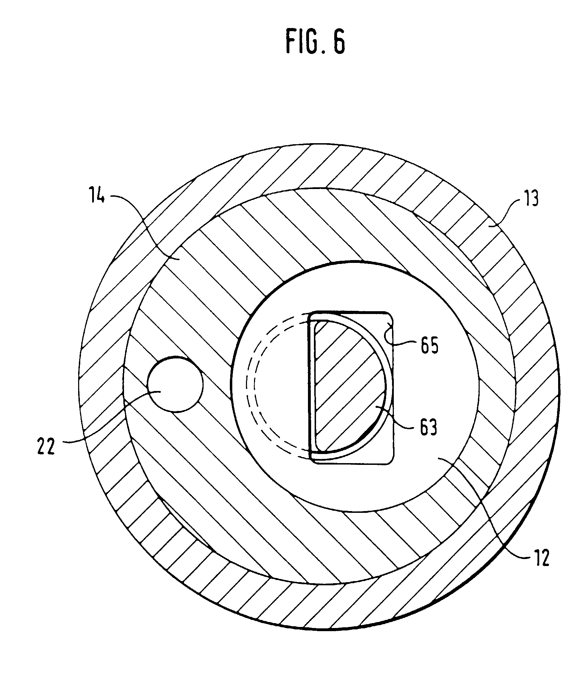

Ausführungsbeispiele der Erfindung sind in der Zeichnung dargestellt und werden im folgenden näher beschrieben. Es zeigen Figur 1 eine Kraftstoffeinspritzdüse mit einem 2-Feder-Düsenhalter im Längsschnitt, Figur 2 eine Einzelheit A der Figur 1 in vergrößertem Maßstab, Figur 3 ein zweites Ausführungsbeispiel eine Einspritzdüse mit einem 2-Feder-Düsenhalter im Längsschnitt, Figur 4 einen Ausschnitt einer Kraftstoffeinspritzdüse mit einem 1-Feder-Düsenhalter im Längsschnitt, Figur 5 einen Ausschnitt einer anderen Kraftstoffeinspritzdüse mit einem 1-Feder-Düsenhalter im Längsschnitt und Figur 6 eine Zwischenscheibe der Kraftstoffeinspritzdüse nach Figur 5 in Draufsicht in der Ebene VI-VI der Figur 5.

### Beschreibung der Ausführungsbeispiele

Das erste Ausführungsbeispiel ist eine Kraftstoffeinspritzdüse für Vor- und Haupteinspritzung des 2-Federhalter-Typs. Die Kraftstoffeinspritzdüse hat einen Düsenkörper 11, der unter Zwischenlage einer Zwischenscheibe 12 mit einer Überwurfmutter 13 an einem Düsenhalter 14 festgespannt ist. In einer Bohrung in der Längsachse b des Düsenkörpers 11 ist eine Ventilnadel 15 gleichachsig verschiebbar geführt, die mit einem nach innen gekehrten Ventilsitz 16 im Düsenkörper 11 zusammenarbeitet. Letzterer weist mehrere Spritzöffnungen 17 auf. Die Führungsbohrung der Ventilnadel 15 ist wie üblich an einer Stelle zu einem Druckraum 18 erweitert, in dessen Bereich die Ventilnadel 15 eine Druckschulter 19 hat.

Der Düsenhalter 14 hat die Form im wesentlichen eines schlanken Zylinders, dessen Achse a gleichachsig zur Längsachse b des Düsenkörpers 15 und der Ventilnadel 15 ausgerichtet ist, und weist im Inneren eine zur Zwischenscheibe 12 hin offene Sackbohrung 21 auf, deren Achse c zu den Achsen a und b des Düsenhalters 14 und des Düsenkörpers 11 um das Maß e parallel versetzt ist. Durch die exzentrische Anordnung der Sackbohrung 21 im Düsenhalter 14 ist die die Sackbohrung 21 umgebende Wand über den Umfang ungleich dick. Im Sektor mit der dicksten Wandstärke durchsetzt ein Zulaufkanal 22 den Düsenhalter 14 parallel zur Achse des Düsenhalters 14. Dieser Zulaufkanal 22 schließt sich an eine erweiterte Bohrung 23 im Anschlußendbereich des Düsenhalters 14 an, die schräg verläuft und in der ein Filter 24 eingesetzt ist. Axial ausgerichtet mit dem Zulaufkanal 22 im Düsenhalter 14 durchsetzt eine Zulaufbohrung 25 die Zwischenscheibe 12, in welche Zulaufbohrung 25 sich eine zur Druckkammer 25 führende Zulaufbohrung 26 im Düsenkörper 11 anschließt.

Etwa in mittlerer Höhe ist in der Sackbohrung 21 des Düsenhalters 14 ein Zwischenboden 27 durch Verstemmen fest angeordnet, der die Sackbohrung 21 in zwei Federkammern 28, 29 zur Aufnahme von zwei Schließfedern 31, 32 unterteilt. Die Schließfedern 31, 32 sind als zylindrische Schraubendruckfedern ausgebildet, deren Achsen gleichachsig zur Achse c der Sackbohrung 21 sind.

Beim oben beschriebenen Ausführungsbeispiel nach den Figuren 1 und 2 haben die beiden Schließfedern 31, 32 gleiche Durchmesser und die zweite Schließfeder 32 stützt sich an dem Zwischenboden 27 im Düsenhalter 14 ab. Dagegen hat das zweite Ausführungsbeispiel nach Figur 3, das ebenfalls eine Einspritzdüse mit einem 2-Feder-Düsenhalter darstellt, und bei dem gleiche Teile gleiche Bezugszeichen tragen wie beim ersten Ausführungsbeispiel nach Figur 1, zwei Schließfedern 46, 47 mit verschiedenem Durchmesser. Entsprechend haben die Federkammern 48, 49 ebenfalls veschiedene Durchmesser, wobei die dem Düsenkörper 11 nahe Federkammer 49 den größeren Durchmesser hat. Am Übergang von der zweiten Federkammer 49 in die erste Fedekammer 48 ist eine Schulter 50 gebildet, an der sich die zweite Schließfeder 47 über eine Scheibe 57 abstützt. Bemerkt sei hierzu, daß für die beiden Federkammern im Düsenhalter 14 auch eine Bohrung mit gleichem Durchmesser eingearbeitet und die Schulter von einer eingeschobenen Hülse gebildet sein kann, die sich im Grund der Bohrung abstützt.

Die von der Ventilnadel 15 entferntere erste Schließfeder 31; 46 die sich über eine Scheibe 34 im Grund der Sackbohrung 21 abstützt, wirkt über einen Druckbolzen 35, eine durch den Zwischenboden 27 greifende Druckstange 36 sowie ein Zwischenstück 37 ständig auf die Ventilnadel 15 in deren Schließrichtung. Die zweite Schließfeder 32, 47 die baugleich wie die erste Schließfeder 31 ausgebildet sein kann, ist in der der Ventilnadel 15 nahen Kammer 29 angeordnet und umgibt die Druckstange 36. Sie stützt sich einerseits am Zwischenboden 27 andererseits auf einer Druckscheibe 33 ab, die in Schließstellung der Ventilnadel 15 auf der der Ventilnadel 15 abgewandten Stirnseite der Zwischenscheibe 12 anliegt. Das pilzförmige Zwischenstück 37 hat einen Zapfen 38 mit einer ebenen Grundfläche 39 und einen verdickten Kopf 41 mit ebenfalls einer ebenen Stirnfläche 42. Dieses Zwischenstück 37 ist in einem entsprechend geformten Durchbruch 40 in der Zwischenscheibe 12 aufgenommen, wobei sein Zapfen 38 im Durchbruch 40 mit Spiel verschiebbar geführt ist, das so bemessen ist, daß Lecköl durch den Spielspalt durchtreten kann. Die Führungsachse des Durchbruchs 40 in der Zwischenscheibe 12 ist gleichachsig mit der Achse c der Sackbohrung 21 im Düsenhalter 14 und der Achse des aus den beiden Schließfedern 31, 32, bzw. 46, 47 den Druckgliedern 35, 36, 37 und 33 gebildeten Federsystems, so daß die Wirkachse c des Federsystems um das Maß e zur Achse b der Ventilnadel 15 parallel versetzt ist. Der Durchmesser des Zapfens 38 des als Drehteil ausgebildeten Zwischenstücks 37 beträgt etwa die Hälfte des Durchmessers des Schaftes der Ventilnadel 15. Mit seiner Grundflache 39 liegt der Zapfen 38 des Zwischenstücks 37 auf der ebenfalls eben ausgebildeten Stirnseite 44 der Ventilnadel 15 exzentrisch auf. Der Durchmesser des Zapfens 38 des Zwischenstücks 37, der Durchmesser der Ventilnadel 15 und die Exzentrizität e der Düsenachse a, b zur Federsystemachse c sind so gewählt, daß das Zwischenstück 37 mit seiner gesamten Grundfläche 39 auf der Stirnseite 44 der Düsennadel 15 anliegt und mit dem Umfang ihrer Grundfläche 37 die Düsenachse a, b berührt oder überdeckt. In Schließstellung der Ventilnadel 15 hat die Stirnfläche 42 des Zwischenstücks 37 zur gegenüberliegenden Seite der Druckscheibe 33 einen Abstand hᵥ und die Stirnseite 44 der Ventilnadel 15 zu der gegenüberliegenden, einen Anschlag bildenden Fläche der Zwischenscheibe 12 einen Abstand h_{g}. Beim Einspritzvorgang, wenn der Kraftstoffdruck in der Druckkammer 18 steigt, führt die Ventilnadel 15 zunächst einen Vorhub hᵥ aus, bei welchem nur die erste Schließfeder 31 als Gegenkraft wirksam ist. Bei diesem Vorhub hᵥ wird eine begrenzte Voreinspritzmenge aus den Spritzöffnungen 17 gespritzt. Der Vorhub hᵥ ist beendet, wenn das Zwischenstück 37 mit seiner Stirnfläche 42 an der Druckscheibe 32 anschlägt. In dieser Stellung verharrt die Ventilnadel 15 bis der weiter ansteigende Kraftstoffdruck die Gegenkräfte beider Schließfedern 31, 32 überwindet.. Danach wird die Ventilnadel 15 samt dem Zwischenstück 37, der Druckstange 36 und dem Druckbolzen 35 sowie der Zwischenscheibe 33 in Öffnungsrichtung weiterbewegt, bis sie mit ihrer Stirnseite 44 an der Zwischenscheibe 12 anschlägt, die den Maximalhub begrenzt.

Die beiden Federkammern 31, 32 sind druckentlastet, durch eine Querbohrung 45 in der Wand des Düsenhalters 14 wird Lecköl abgeführt.

Das dritte Ausführungsbeispiel nach Figur 4, bei dem gleichartige Teile beim ersten Ausführungsbeispiel mit gleichen Bezugszeichen versehen sind, zeigt den Bereich der Federkraftübertragung auf die Ventilnadel 15 einer Einspritzdüse mit nur einer Schließfeder 51. Die Federkraft der Schließfeder 51 wird über einen Druckbolzen 52 auf die Ventilnadel 15 übertragen, der einen die Zwischenscheibe 12 durchsetzenden Zapfen 53 mit einer ebenen Grundfläche 54 hat, mit der er auf der ebenen Stirnseite 44 der Ventilnadel aufliegt. Der Zapfen 53 ist in einer zylindrischen Bohrung 55 in der Zwischenscheibe 12 mit Spiel verschiebbar geführt, deren Achse c gleichachsig mit der des Federsystems ist und die zur Längsachse b der Ventilnadel 15 um das Maß e exzentrisch angeordnet ist. Die Abmessung der Anlageflächen und der Exzentrizität e sind ähnlich wie beim Ausführungsbeispiel nach den Figuren 1 und 2.

Bei dem Ausführungsbeispiel nach den Figuren 5 und 6, bei dem gleichartige Teile wie bei den beiden oben beschriebenen Ausführungsbeispielen mit gleichen Bezugszeichen versehen sind, handelt es sich ebenfalls wie bei dem Ausführungsbeispiel nach Figur 3 um eine Einspritzdüse mit nur einer Schließfeder 51. Diese belastet die Ventilnadel 15 über einen Druckbolzen 62, dessen der Zwischenscheibe 12 zugewandte Stirnseite 64 eben ist. Im Gegensatz zu den beiden anderen Ausführungsbeispielen ist an der Ventilnadel 15 ein Zapfen 63 angeformt, der mit großem Spiel durch einen im wesentlichen rechteckförmigen Duchbruch 65 in der Zwischenscheibe 12 ragt und auf dessen Stirnseite 66 der Druckbolzen 62 mit seiner Stirnfläche 64 aufliegt. Die Mittel- bzw. Schwerpunktachsen des Zapfens 63 und des Durchbruchs 65 sind ebenfalls exzentrisch zur Mittelachse b der Ventilnadel 15. Der Zapfen 63 ist geformt durch eine seitliche, stufenförmige Abtagung an der Ventilnadel 15, wobei eine Anschlagschulter 67 gebildet ist, die beim Maximalhub h der Ventilnadel 15 an der Zwischenscheibe 12 anschlägt. Der exzentrische Zapfen 63 kann anstelle des gezeigten kreisabschnittförmigen Querschnitts einen Rundquerschnitt haben. In diesem Falle hat der Durchbruch in der Zwischenscheibe ebenfalls einen Kreisquerschnitt.

## Patentansprüche

1. Kraftstoffeinspritzdüse für eine Brennkraftmaschine, insbesondere für eine direkteinspritzende Dieselbrennkraftmaschine, mit einem Düsenkörper (11), in dem eine mit einem Ventilsitz (16) zusammenwirkende, in Schließrichtung von einer Schraubendruckfeder (31,32) und in Öffnungsrichtung vom Kraftstoffdruck beaufschlagte Ventilnadel (15) in der Längsachse (b) des Düsenkörpers (11) verschiebbar geführt ist, mit einem gleichachsig mit dem Düsenkörper (11) verbundenen Düsenhalter (14), in dem zur Längsachse (b) des Düsenkörpers (11) axial versetzt eine zum Düsenkörper (11) hin offene zylindrische Federkammer (28,29) und in dieser die Schließfeder (31,32) sowie parallel dazu ein Kraftstoffzulaufkanal (22) in dem durch die Exzentrizität der Federkammer (28,29) bewirkten dickeren Wandteil des Düsenhalters (14) angeordnet sind, und mit einer zwischen dem Düsenkörper (11) und dem Düsen-halter (14) gleichachsig und dichtend eingespannten Zwischenscheibe (12) , an der die Ventilnadel (15) mit einer Anschlagfläche (44) beim Maximalhub anschlägt, und die einen Durchbruch (40,55,65) für einen Zapfen (38,53,63) aufweist, über dessen freie Stirnfläche (39,54,66) die Schließkraft der Schraubendruckfeder (31,32) auf die Ventilnadel (15) übertragen wird, dadurch gekennzeichnet, daß der Durchbruch (40, 55, 65) und der Zapfen (38, 53, 63) in der Zwischenscheibe (12) axial versetzt zur Längsachse (b) des Düsenkörpers (11) und der Ventilnadel (15) und im wesentlichen gleichachsig zur Achse (c) der Schließfeder (31, 32; 46, 47; 51) angeordnet sind.

2. Kraftstoffeinspritzdüse nach Anspruch 1, dadurch gekennzeichnet, daß die Stirnfläche (39, 54, 64) des Zapfens (38, 53, 63) mit einem Teil ihres Außenrandbereichs die Längsachse (b) des Düsenkörpers (11) aufnimmt.

3. Kraftstoffeinspritzdüse nach Anspruch 1 oder 2, dadurch gekennzeichnet, daß der Zapfen (38, 53) einstückig mit einem Druckglied (37) verbunden und im Durchbruch (40, 55) in der Zwischenscheibe (12) verschiebbar geführt ist.

4. Kraftstoffeinspritzdüse nach Anspruch 3, dadurch gekennzeichnet, daß das Druckglied (37) am Zapfen (38) einen Kopf (41) hat und im entsprechend ausgebildeten Durchbruch (40) der Zwischenscheibe (12) angeordnet ist.

5. Kraftstoffeinspritzdüse nach Anspruch 1 oder 2, dadurch gekennzeichnet, daß der Zapfen (63) einstückig mit der Ventilnadel (15) eine Anschlagschulter (67) belassend verbunden ist.

6. Kraftstoffeinspritzdüse nach Anspruch 5, dadurch gekennzeichnet, daß der Zapfen (63) durch eine seitliche Abtragung an der Ventilnadel (15) gebildet ist.

7. Kraftstoffeinspritzdüse nach einem der Ansprüche 1 bis 6, dadurch gekennzeichnet, daß im Düsenhalter (14) zwei Schließfedern (31, 32; 46, 47) angeordnet sind, die beim Hub der Ventilnadel (15) nacheinander über das Druckglied (37) auf die Ventilnadel (15) wirken.

## Claims

1. Fuel injection nozzle for an internal combustion engine, in particular for a direct-injection diesel internal combustion engine, with a nozzle body (11), in which a valve needle (15), cooperating with a valve seat (16) and loaded in the closing direction by a helical compression spring (31, 32) and in the opening direction by the fuel pressure, is guided displaceably in the longitudinal axis (b) of the nozzle body (11), with a nozzle holder (14) which is connected coaxially to the nozzle body (11) and in which are arranged, offset axially to the longitudinal axis (b) of the nozzle body (11), a cylindrical spring chamber (28, 29) open towards the nozzle body (11) and, in the said spring chamber, the closing spring (31, 32) as well as, parallel thereto, a fuel inflow duct (22) in the thicker wall part of the nozzle holder (14), the said wall part resulting from the eccentricity of the spring chamber (28, 29), and with an intermediate disc (12) which is clamped coaxially and sealingly between the nozzle body (11) and the nozzle holder (14) and on which the valve needle (15) butts with an abutment face (44) at the maximum stroke and which has a perforation (40, 55, 65) for a stud (38, 33, 63), via the free end face (39, 54, 66) of which the closing force of the helical compression spring (31, 32) is transmitted to the valve needle (15), characterized in that the perforation (40, 55, 65) and the stud (38, 53, 63) are arranged in the intermediate disc (12) so as to be axially offset to the longitudinal axis (b) of the nozzle body (11) and of the valve needle (15) and essentially coaxial to the axis (c) of the closing spring (31, 32; 46, 47; 51).

2. Fuel injection nozzle according to Claim 1, characterized in that the end face (39, 54, 64) of the stud (38, 53, 63) receives with part of its outer edge region the longitudinal axis (b) of the nozzle body (11).

3. Fuel injection nozzle according to Claim 1 or 2, characterized in that the stud (38, 53) is connected integrally to a pressure member (37) and is guided displaceably in the perforation (40, 55) in the intermediate disc (12).

4. Fuel injection nozzle according to Claim 3, characterized in that the pressure member (37) on the stud (38) has a head (41) and is arranged in the correspondingly designed perforation (40) of the intermediate disc (12).

5. Fuel injection nozzle according to Claim 1 or 2, characterized in that the stud (63) is connected integrally to the valve needle (15) so as to leave an abutment shoulder (67) .

6. Fuel injection nozzle according to Claim 5, characterized in that the stud (63) is formed by lateral erosion on the valve needle (15).

7. Fuel injection nozzle according to one of Claims 1 to 6, characterized in that the nozzle holder (14) has arranged in it two closing springs (31, 32; 46, 47) which, during the stroke of the valve needle (15), act in succession on the valve needle (15) via the pressure member (37) .

## Revendications

1. Injecteur de carburant pour moteur à combustion interne, notamment pour moteur Diesel à injection directe comprenant :
- un corps d'injecteur (11) dans lequel une aiguille d'injecteur (15) coopérant avec un siège de clapet (16) est soumise dans le sens de la fermeture à l'action d'un ressort hélicoïdal (31, 32) et dans le sens de l'ouverture, à l'action du carburant, cette aiguille coulissant dans la direction de l'axe longitudinal (b) du corps (11),
- un support d'injecteur (14) relié au corps (11) de façon coaxiale et dans lequel, décalée axialement par rapport à l'axe longitudinal (b) du corps (11), il y a une chambre à ressort (28, 29) cylindrique ouverte en direction du corps de buse (11), et dans celle-ci le ressort obturateur (31, 32) et parallèlement à cela un canal d'alimentation en carburant (22) dans la partie de paroi plus épaisse du support (14) résultant de l'excentricité de la chambre à ressort (28, 29), et
- une rondelle intermédiaire (12) fixée de manière coaxiale et étanche entre le corps d'injecteur et le support (14), de façon coaxiale, rondelle contre laquelle vient buter l'aiguille (15) avec une surface de butée (44) pour la course maximale, et qui comporte un passage (40, 55, 65) pour un téton (38, 53, 63) dont la surface frontale libre (39, 54, 66) transmet la force de fermeture exercée par le ressort hélicoïdal de compression (31, 32) sur l'aiguille d'injecteur (15),
caractérisé en ce que
le passage (40, 55, 65) et le téton (38, 53, 63) sont prévus dans la rondelle intermédiaire (12) de manière décalée axialement par rapport à l'axe longitudinal (b) du corps d'injecteur (11) et de l'aiguille d'injecteur (15) et qui sont essentiellement coaxiaux par rapport à l'axe (c) des ressorts obturateurs (31, 32 ; 46, 47 ; 51).

2. Injecteur de carburant selon la revendication 1,
caractérisé en ce que
la surface frontale (39, 54, 64) du téton (38, 53, 63) reçoit avec une partie de son bord extérieur, l'axe longitudinal (b) du corps d'injecteur (11).

3. Injecteur de carburant selon l'une quelconque des revendications 1 et 2,
caractérisé en ce que
le téton (38, 53) est relié à une seule pièce avec un organe de pression (37) et est guidé en coulissement dans le passage (40, 55) de la rondelle intermédiaire (12).

4. Injecteur selon la revendication 3,
caractérisé en ce que
l'organe de pression (37) présente au niveau du téton (38), une tête (41) et est logée dans un passage (40) de forme correspondante de la rondelle intermédiaire (12).

5. Injecteur de carburant selon l'une quelconque des revendications 1 et 2,
caractérisé en ce que
le téton (63) fait corps avec l'aiguille (15) et est relié de manière à laisser un épaulement de butée (67).

6. Injecteur de carburant selon la revendication 5,
caractérisé en ce que
le téton (63) est réalisé par un enlèvement latéral de matière au niveau de l'aiguille d'injecteur (15).

7. Injecteur de carburant selon l'une des revendications 1 et 6,
caractérisé par
deux ressorts obturateurs (31, 32 ; 46, 47) prévus dans le support (14), et qui agissent successivement sur l'organe de pression (37) et l'aiguille (15) au cours de la course de l'aiguille (15).
